# EUROPEAN PATENT SPECIFICATION

(11) **EP 2 045 461 B1**
(45) Date of publication and mention of the grant of the patent: **21.12.2011**
(21) Application number: 08253197.1
(22) Date of filing: 01.10.2008
(51) Int. Cl.: F02M 35/024, F02M 35/04, F02M 35/16, B60K 13/02, B62K 11/04

(54) **Motorcycle**
Motorrad
Motocyclette

(30) Priority: 03.10.2007 JP 2007259648
(43) Date of publication of application: 08.04.2009
(73) Proprietor: Yamaha Hatsudoki Kabushiki Kaisha, Shizuoka-ken Shizuoka 438-8501 (JP)
(72) Inventor: Nishizawa, Kazuya , Yamaha Hatsudoki K.K., Shizuoka-ken 438-8501 (JP); Terumichi, Satoshi , Yamaha Hatsudoki K.K., Shizuoka-ken 438-8501 (JP); Shimomura, Hiroshi , Yamaha Hatsudoki K.K., Shizuoka-ken 438-8501 (JP)
(74) Representative: Lamb, Martin John Carstairs

(56) References cited:
- EP-A1- 1 762 442
- DE-A1-102005 044 138
- JP-A- 63 166 674
- JP-A- 2001 106 151
- JP-A- 2007 032 428

## Description

### FIELD OF THE INVENTION

The present invention relates to a motorcycle.

### BACKGROUND TO THE INVENTION

Motorcycles are known in which a pair of left and right frames extend rearward from a head pipe and at least a part of an air cleaner is disposed between both the frames. The air cleaner includes an air cleaner case and an element disposed in the air cleaner case.

JP-A-Sho 63-145189 and JP-B-3701716 each disclose motorcycles. However, it is not clear from these prior art references as to how an element of an air cleaner is disposed. JP 2007 032 428 and DE 10 2005 044 138 also show known air cleaner cases for motorcycles. However, when at least a part of the air cleaner is disposed between the left and right frames and the element is disposed to divide the inside of the air cleaner case into upper and lower spaces, the following problems are caused.

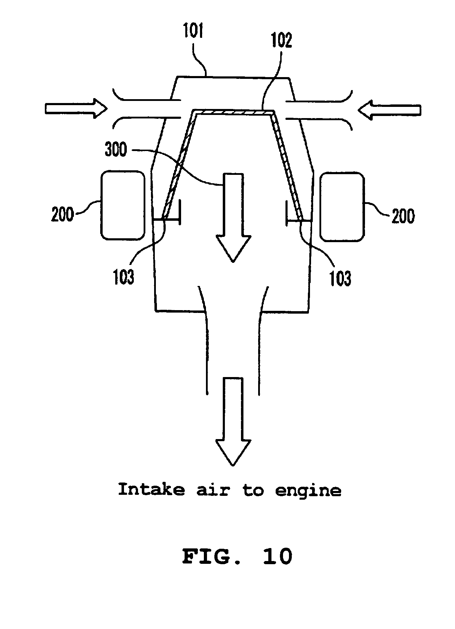

An air cleaner passes air through its element to remove dust and the like in the air. Therefore, it is essentially required to prevent the air from bypassing the element. Accordingly, it is required to seal edges of the element. However, as shown in FIG. 10, when an air cleaner case 101 is disposed between a pair of left and right frames 200, 200 and a seal section 103 for sealing an element 102 is disposed between the both frames 200, 200, the passage area of an air flow 300 that mainly flows vertically in the air cleaner case 101 becomes narrow within the seal section 103. In the case that the passage area of the air flow 300 in the air cleaner case 101 is small, a sufficient amount of intake air may not be supplied to an engine when, for example, the throttle is opened sharply.

The present invention has been made in view of the above situation. It is an object of the invention to provide a sufficient amount of intake air to an engine in an motorcycle including an air cleaner having an air cleaner case disposed between a pair of left and right frames and an element disposed to divide at least a part of the inside of the air cleaner case into upper and lower spaces.

### SUMMARY OF THE INVENTION

According to the present invention there is provided a motorcycle comprising:
a body frame having a head pipe and left and right frame members extending rearward from the head pipe; and
an air cleaner having an air cleaner case and an element disposed inside the air cleaner case for cleaning air to be supplied to an engine, wherein the air cleaner case includes:
   a lower section, at least a part of which lower section is disposed between the left and the right frame members; and
   an upper section having a seal section disposed above the frame members, at least a part of the seal section being positioned outwardly of inner ends of the left and the right frame members in a lateral direction,
wherein the element is supported and sealed by the seal section and divides at least a part of the inside of the air cleaner case into upper and lower spaces.

The element may be formed in a plate shape. The element may be curved, and may be convex upward.

The motorcycle may further comprise a fuel tank, wherein at least a part of the fuel tank may be positioned above at least part of the air cleaner case.

At least a part of a portion of the air cleaner case positioned below the fuel tank may be profiled downward. The profile may be defined by a concave shape, a dented profile or the like.

The motorcycle may further comprising a seat, wherein at least a part of the seat may be positioned above at least part of the fuel tank.

The fuel tank may include a cap positioned above at least a part of the air cleaner case.

The air cleaner case may include a dirty-side chamber positioned above the element and an intake duct forming an inflow passage that introduces intake air into the dirty-side chamber.

The duct may be connected to the dirty-side chamber such that when the inflow passage is extended into the dirty-side chamber, the extended part of the inflow passage does not intersect with an upper surface of the element.

The inflow passage of the intake duct may be arranged such that intake air is not focused directly towards an upper surface of the element.

The air cleaner case may include a first case member having the upper section and the lower section and a second case member detachably attached to the first case member to cover the first case member from above. The first case member may be integrally formed.

The upper section may protrude from the lower section above the left and right frame members, and may extend outward in the lateral direction.

The motorcycle may be an off-road type.

Here, "divide into upper and lower spaces" includes not only dividing by a horizontal plane but also dividing by a plane tilting from a horizontal direction (in other words, obliquely dividing into upper and lower spaces). "Extending rearward from the head pipe in the side view" includes not only extending horizontally rearward from the head pipe in the side view but also extending in a direction tilted from the horizontal direction.

In the above motorcycle, the seal section for supporting the element is positioned above the left and the right frame members. Consequently, although a part (i.e. lower section) of the air cleaner case is disposed between the left and the right frame members, a relatively large flow passage area can be secured inside the seal section. Therefore, according to the above motorcycle, a sufficient amount of intake air to the engine can be secured.

In the above motorcycle, the seal section is positioned above the left and the right frame members. Accordingly, the width of the element can be made larger. Therefore, the surface area of the element can be increased. This also facilitates to secure a sufficient amount of intake air to the engine.

According to the present invention, it is possible to provide a sufficient amount of intake air to an engine in an motorcycle including an air cleaner having an air cleaner case disposed between a pair of left and right frames and an element disposed to divide at least a part of the inside of the air cleaner case into upper and lower spaces.

### BRIEF DESCRIPTION OF THE DRAWINGS

These and other aspects of the present invention will now be described, by way of example only, with reference to the accompanying drawings, in which:
FIG. 1 is a side view of a motorcycle according to a first embodiment;
FIG. 2 is an enlarged side view showing a part of FIG. 1;
FIG. 3 is a sectional view of an air cleaner according to the first embodiment as viewed from the left side;
FIG. 4 is a sectional view of the air cleaner according to the first embodiment as viewed from the front side;
FIG. 5 is an exploded view of the vicinity of the air cleaner as viewed from above in the state that a second case member of the air cleaner according to the first embodiment is detached;
FIG. 6 (a) and 6 (b) are schematic views of the air cleaner according to the first embodiment;
FIG. 7 is a schematic view of an air cleaner according to a second embodiment;

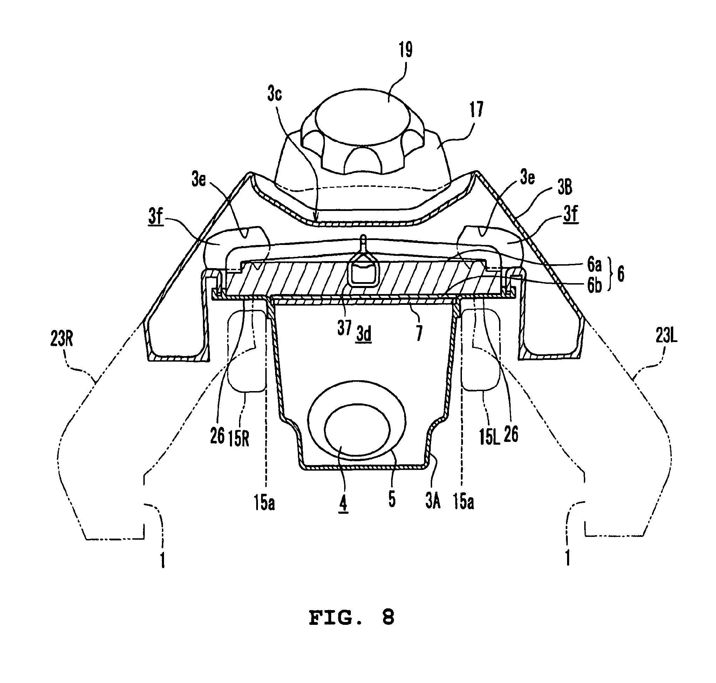

FIG. 8 is a sectional view of an air cleaner according to a modified embodiment as viewed from the front side;
FIG. 9(a) and 9(b) are schematic views of air cleaners according to modified embodiments; and
FIG. 10 is a schematic view of a conventional air cleaner.

### DETAILED DESCRIPTION OF THE DRAWINGS

### First embodiment

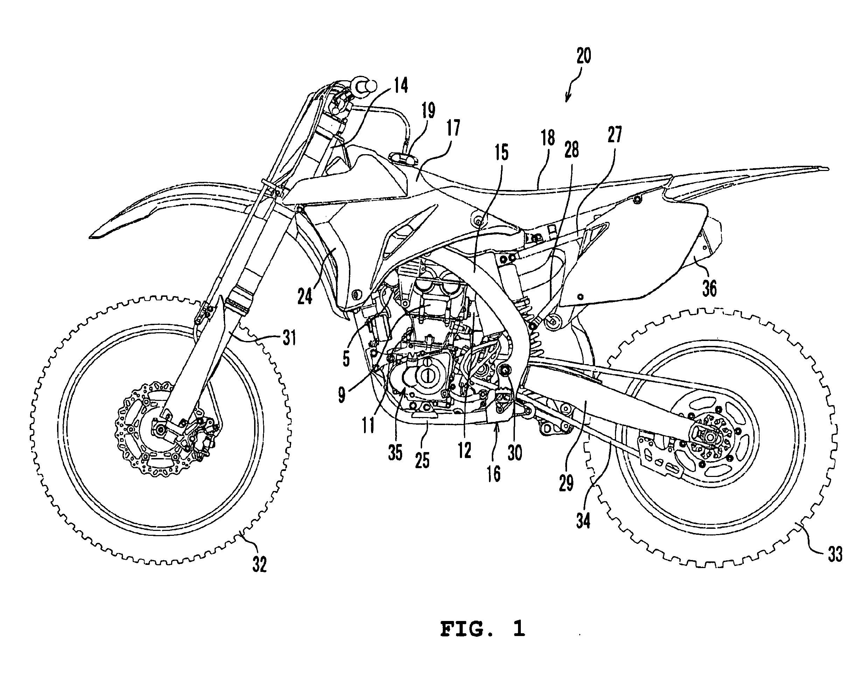

FIG. 1 is a left side view of a motorcycle 20 according to this embodiment. With reference to FIG. 1, a general construction of the motorcycle 20 will be described. In the following description, front, rear, left and right directions are those as viewed from a rider seated on a seat 18.

The motorcycle 20 includes a body frame 16 forming a framework, and a seat 18 on which a rider is to be seated. The motorcycle 20 is a so-called off-road motorcycle. However, a motorcycle according to the present invention is not limited to this, but can be a motorcycle other than an off-road type (such as motorcycle type, scooter type, or so-called moped type motorcycle).

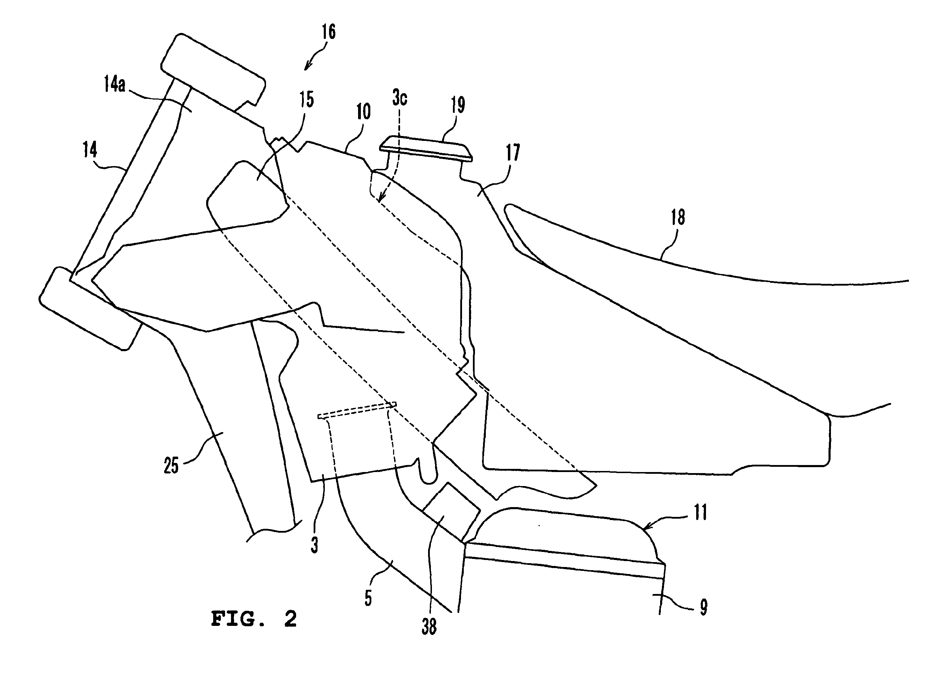

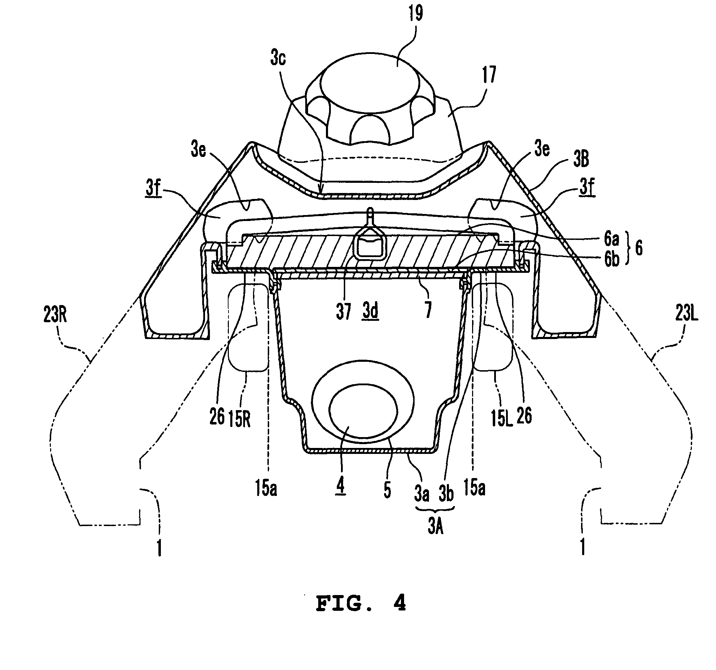

The body frame 16 includes a head pipe 14, a down tube 25, and a main frame 15. As shown in FIG. 2, the down tube 25 extends downward from a bracket 14a of the head pipe 14. On the other hand, the main frame 15 extends rearward from the bracket 14a of the head pipe 14 at a position above the down tube 25. The main frame 15 is constructed with a pair of left and right frame members 15L, 15R (see FIG. 4) that extend rearward from the bracket 14a of the head pipe 14. The main frame 15 extends more downward at its more rearward position.

As shown in FIG. 1, a pair of left and right seat rails 27 are connected to the main frame 15. The seat rails 27 extend rearward. A back stay 28 is connected to the main frame 15 at a position below a part to which the seat rail 27 is connected. Further, a rear arm 29 is coupled to the lower ends of the main frame 15 with a pivot shaft 30 therebetween.

The lower end of the head pipe 14 is connected to a front fork 31. A front wheel 32 is connected to the front fork 31 and a rear wheel 33 is connected to the rear end of the rear arm. A cover 24 is provided above the body frame 16 to cover the body frame 16. Further, a fuel tank 17 extends between the main frame 15 and the back stay 28 above thereof. The seat 18 is disposed above the fuel tank 17. Specifically, as shown in FIG. 2, a front portion of the seat 18 including at least its front end is positioned above the fuel tank 17. The front portion of the seat 18 including at least its front end is disposed to overlap a rear potion of the fuel tank 17 including at least its rear end as viewed from top.

As shown in FIG. 1, a power unit 35 is disposed between the down tube 25 and the main frame 15 to be attached thereto. The power unit 35 is integrally constituted by an engine 11 for generating driving force and a transmission. The power unit 35 is connected to the rear wheel 33 via a power transmission means 34 such as a chain. With this construction, driving force generated by the engine 11 is transmitted to the rear wheel 33 through the power transmission means 34.

The engine 11 has a cylinder 9. The cylinder 9 protrudes obliquely upward and to the rear in the side view. However, the cylinder 9 may extend upward in the side view. Furthermore, the cylinder 9 may extend obliquely upward and forward in the side view. In this embodiment, the engine 11 is a four-cycle or four-stroke single-cylinder engine. Alternatively, the engine 11 may be two-cycle or two-stroke engine or may have multiple cylinders.

As shown in FIG. 2, the cylinder 9 is connected to one end of an intake pipe 5. The intake pipe 5 extends obliquely upward from the cylinder 9 in the side view. The intake pipe 5 extends obliquely forward from the front side of the cylinder 9 in the side view. The other end of the intake pipe 5 is connected to an air cleaner case 3 of an air cleaner 10. As described in detail later, the air cleaner 10 passes air to be supplied to the engine 11 to purify the air. Meanwhile, the intake pipe 5 may extend generally horizontally forward from the front side of the cylinder 9. Reference numeral 38 denotes a fuel injection device or a carburetor disposed in the midway of the intake pipe 5 for supplying fuel into the intake pipe 5.

As shown in FIG. 1, one end of an exhaust pipe 12 is connected to the cylinder 9. The exhaust pipe 12 extends obliquely rearward from the rear side of the cylinder 9 in the side view. The other end of the exhaust pipe 12 is connected to a muffler 36. However, the exhaust pipe 12 may alternatively extend generally horizontally rearward from the rear side of the cylinder 9.

In this embodiment, the intake pipe 5 extends forward or obliquely forward from the front side of the cylinder 9 while the exhaust pipe 12 extends obliquely rearward from the rear side of the cylinder 9. However, the motorcycle according to the present invention is not limited thereto. The motorcycle according to the present invention may be a motorcycle in which the intake pipe 5 extends rearward or obliquely rearward from the rear side of the cylinder 9 and the exhaust pipe 12 extends forward or obliquely forward from the front side of the cylinder 9.

The above is a general construction of the motorcycle 20. Next, a construction of the air cleaner 10 according to the present invention will be described in detail.

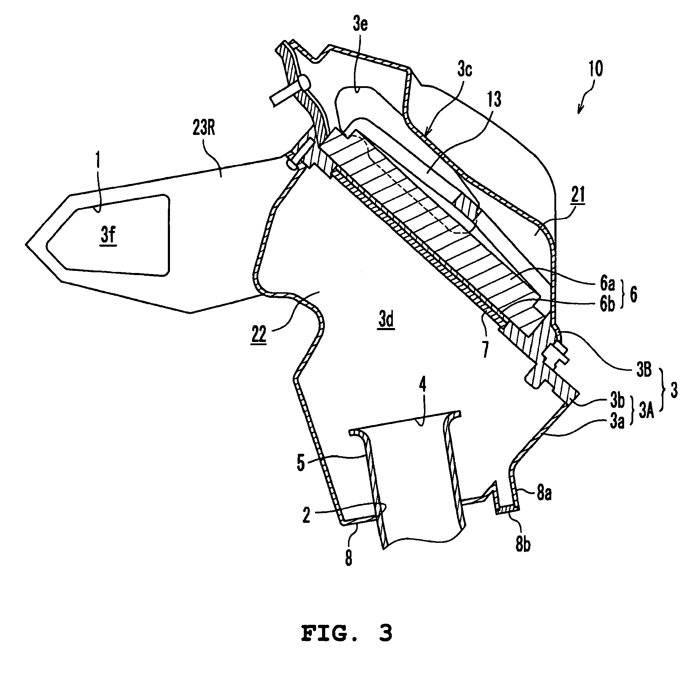

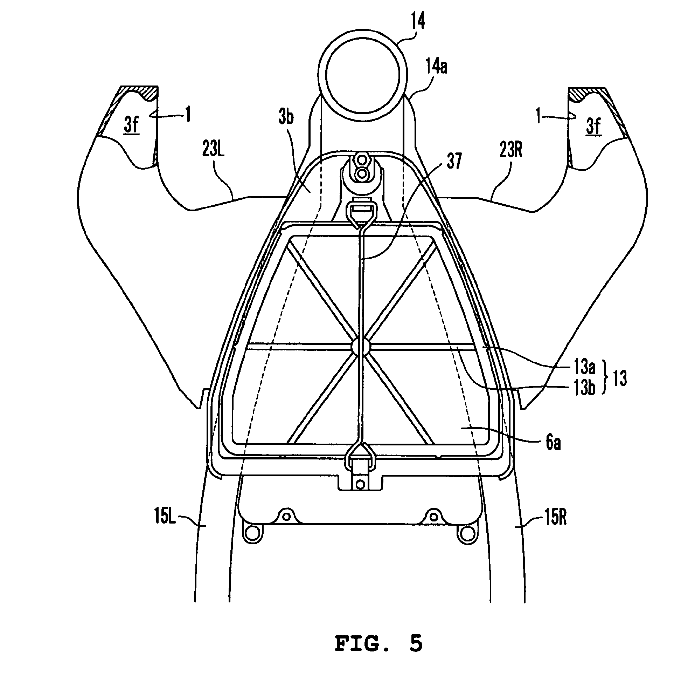

FIG. 3 is a sectional view of the air cleaner 10 as viewed from the left side. FIG. 4 is a sectional view of the air cleaner 10 as viewed from the front side. FIG. 5 is an elevational view of the vicinity of the air cleaner 10 from above. As shown in FIGs. 3 and 4, the air cleaner 10 has the air cleaner case 3 and an element 6 disposed inside the air cleaner case 3. The element 6 is attached inside the air cleaner case 3. The air cleaner case 3 includes a first case member 3A, a second case member 3B, and two ducts 23L, 23R (see FIG. 4).

As shown in FIG. 4, the first case member 3A includes a lower section 3a and an upper section 3b. At least a part of the lower section 3a is interposed between the left and the right frame members 15L, 15R which form the main frame 15. In this embodiment, an upper part of the lower section 3a is interposed between the left and the right frame members 15L, 15R. On the other hand, the upper section 3b protrudes above the left and the right frame members 15L, 15R from the lower section 3a and extends outward in a lateral direction. The upper section 3b has a seal section 26 abutting on and supporting a main element 6a, which will be described later. The seal section 26 is positioned above the left and the right frame members 15L, 15R and at least a part of the seal section 26 is positioned more outside inner ends 15a of the left and the right frame members 15L, 15R.

The second case member 3B covers the first case member 3A from above and is detachably attached to the first case member 3A. The first case member 3A and the second case member 3B form an inner space 3d in the air cleaner case 3 that temporarily reserves air and passes it toward the intake pipe 5.

Two openings 3e are formed in the second case member 3B. The openings 3e are formed generally symmetrically in the lateral direction. The ducts 23L, 23R are respectively attached to the two openings 3e. The duct 23L disposed in the left side and the duct 23R disposed in the right side are formed in generally symmetrical shapes. The ducts 23L, 23R respectively extend outward in the lateral direction from the second case member 3B and then curve to further extend forward (see FIG. 5). Inlets 1 for introducing outside air into the ducts 23L, 23R are respectively formed at the front ends of the two ducts 23L, 23R. Inflow passages 3f for introducing the outside air to the inner space 3d (more specifically, to a dirty-side chamber, which will be described later) are respectively formed in the two ducts 23L, 23R. However, the two openings 3e may not be formed in generally symmetrical positions in the lateral direction. Also, the ducts 23L, 23R may not be formed in generally symmetrical shapes in the lateral direction.

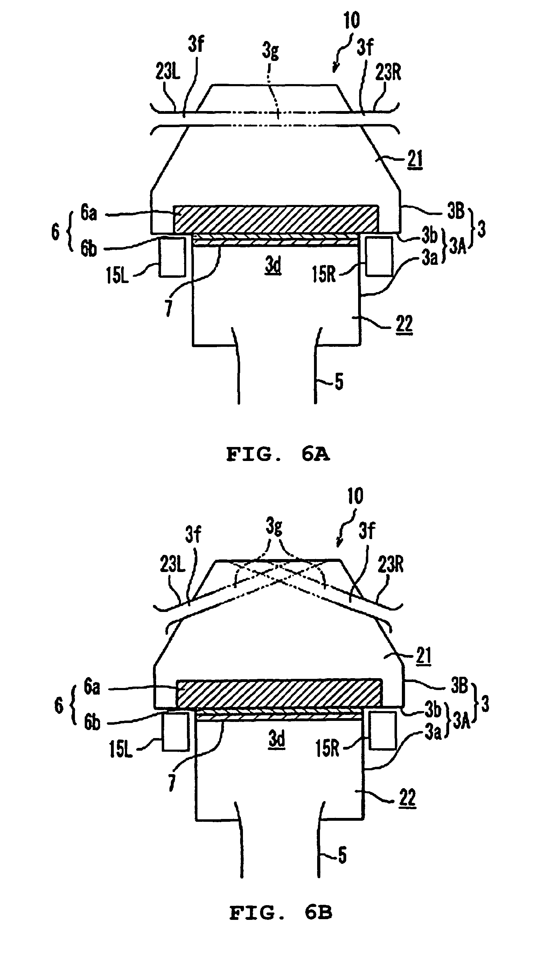

The ducts 23L, 23R are connected to the second case member 3B in such a manner that when the inflow passages 3f are extended toward the inner space 3d side, the inflow passages 3f do not intersect with an upper surface of the element 6. Specifically, as shown in FIGs. 6 (a) and 6 (b), the ducts 23L, 23R are connected to the second case member 3B so that extended portions 3g (portions within the air cleaner case 3) of the inflow passages 3f extend not to intersect with the upper surface of the main element 6a. In other words, the ducts 23L, 23R are connected to the second case member 3B in such a manner that when the inflow passages 3f are extended toward the inner space 3d side, the extended portions of the inflow passages 3f extend above the upper surface of the element 6.

More specifically, the ducts 23L, 23R may be connected, as shown in FIG. 6(a), so that the extended portions 3g of the inflow passages 3f extend generally parallel with the upper surface of the main element 6a. Further, the ducts 23L, 23R may be connected, as shown in FIG. 6(b), so that the extended portions 3g of the inflow passages 3f extend in a direction (obliquely upward) deviating from the upper surface of the main element 6a.

As shown in FIG. 3, the lower section 3a of the first case member 3A which forms a part of the inner space 3d has a bottom 8. An outlet 2 for ejecting air out of the inner space 3d is formed in the bottom 8. The intake pipe 5 is connected to the outlet 2. An intake opening 4 is formed in the intake pipe 5 to open upward or obliquely upward in the inner space 3d. The intake pipe 5 extends above the bottom 8 in the inner space 3d. Accordingly, the intake opening 4 is positioned above the bottom 8. Alternatively, the intake pipe 5 may be connected to the bottom 8 of the air cleaner case 3 so that the intake opening 4 is generally flush with the bottom 8 of the air cleaner case 3. In this case, the intake opening 4 opens upward or obliquely upward toward the inner space 3d.

At the bottom 8, a drainage section 8a is formed for discharging water when the water by the rainfall or the like collects on the bottom 8. In this embodiment, the drainage section 8a is closed by a lid 8b. With such a construction, dust is prevented from entering through the drainage section 8a into a clean-side chamber 22, which will be described later. The drainage section 8a may alternatively be closed by a sponge or the like instead of the lid 8b. Also, the drainage section 8a may be provided with a backflow prevention device without the lid 8b.

As shown in FIG. 2, at least a part of the air cleaner case 3 is disposed below the fuel tank 17. More specifically, a part of the rear side of the air cleaner case 3 is positioned below a part of the front side of the fuel tank 17. As shown in FIGs. 2 and 4, at least a portion 3c of the air cleaner case 3, which is the part positioned below the fuel tank 17, is profiled, dented or formed downward, or is concave. Accordingly, at least a part of the fuel tank 17 is positioned over the portion 3c of the air cleaner case 3, which is dented downward. As shown in FIG. 2, the fuel tank 17 is provided with a cap 19 to cover a filler (not shown) opening upward. The cap 19 is positioned above the portion 3c of the air cleaner case 3, which is dented downward.

As shown in FIG. 3, in this embodiment, the element 6 is formed in a plate shape. The element 6 includes a main element 6a and an auxiliary element 6b, which is separate from the main element 6a. Both the main element 6a and the auxiliary element 6b are disposed in the inner space 3d. The element 6 divides the inner space 3d, which is at least a part of the inside of the air cleaner case 3, into upper and lower spaces. More specifically, the element 6 divides the inner space 3d into a dirty-side chamber 21 positioned above the main element 6a and a clean-side chamber 22 positioned below the auxiliary element 6b.

It should be noted that, "divide into upper and lower spaces" here includes not only dividing by a horizontal plane but also dividing by a plane tilting from a horizontal direction as in this embodiment (in other words, obliquely dividing into upper and lower spaces).

The main element 6a is disposed above the intake opening 4. The main element 6a is supported by the seal section 26 of the upper section 3b of the first case member 3A and thereby sealed around its circumference. On the other hand, the auxiliary element 6b is attached to the upper section 3b so as to be positioned above the intake opening 4 and below the main element 6a. In this embodiment, the main element 6a is constructed to be detachable from the upper section 3b with the auxiliary element 6b remaining attached to the upper section 3b. In other words, the main element 6a is constructed to be detachable from the upper section 3b with the auxiliary element 6b remaining attached in the inner space 3d.

The main element 6a has a finer element than the auxiliary element 6b has. In other words, the auxiliary element 6b has a coarser element than the main element 6a has. However, the main element 6a and the auxiliary element 6b may have an element of the same fineness. Further, the main element 6a may have a coarser element than the auxiliary element 6b has.

A pressing member 13 is disposed above the main element 6a. The pressing member 13 presses the main element 6a downward or obliquely downward. In this embodiment, as shown in FIG. 5, the pressing member 13 includes a frame 13a in a generally trapezoidal shape and six ribs 13b radially extending from the center of the frame 13a. Also, in this embodiment, the pressing member 13 is fixed by a detachable fixing member 37. In FIG. 3, the fixing member 37 is not shown.

Further as shown in FIG. 3, in this embodiment, a flameproof net 7 is disposed under the auxiliary element 6b. The flameproof net 7 extinguishes any flames caused by a backfire (backfire is a phenomenon in which mixture gas to be combusted in the cylinder 9 flows back to the intake pipe 5 and so forth) from the engine 11 and thereby prevents the element 6 from being burned by the flames.

With the above construction, outside air taken from the inlets 1 into the ducts 23L, 23R is introduced to an upper portion (dirty-side chamber 21) in the inner space 3d through the inflow passages 3f. The air further flows from top to bottom (from the dirty-side chamber 21 to the clean-side chamber 22) in the inner space 3d. At this time, the air passes through the main element 6a and the auxiliary element 6b. Dust and the like in the air are captured by the main element 6a as the air passes through the main element 6a. As a result, the air is purified. In this embodiment, the auxiliary element 6b has a coarser element than the main element 6a has. Therefore, dust and the like are mostly captured by the main element 6a but are hardly captured by the auxiliary element 6b. Thus, the air passed through the element 6 flows into the intake pipe 5 through the intake opening 4. The air is then supplied to the cylinder 9 in the engine 11 through the intake pipe 5.

An example of performing maintenance work (replacement, washing or cleaning) of the element 6, which is one of maintenance works of the air cleaner 10, will now be described.

Generally, with normal use, an element of the air cleaner will become clogged with captured dust and becomes dirty, and will thus operate at a reduced purification performance. Consequently, regular replacement is necessary. In the air cleaner 10 according to this embodiment, the element 6 includes the main element 6a and the auxiliary element 6b, which has a coarser element than the main element 6a has. Accordingly, dust so sized as to be captured by the auxiliary element 6b is mostly captured by the main element 6a. As a result, the auxiliary element 6b has less dirt. Therefore, it is possible in the air cleaner 10 to recover the reduced purification performance by replacing, washing or cleaning only the main element 6a when the element 6 is subjected to replacement, washing or cleaning. The maintenance work (replacement, washing or cleaning) of the main element 6a will be described bellow.

First, the second case member 3B is detached from the first case member 3A. After detaching the second case member 3B from the first case member 3A, the fixing member 37 for fixing the pressing member 13 is disengaged and the pressing member 13 is detached. Next, the main element 6a is detached from the seal section 26 of the upper section 3b in the first case member 3A. It should be noted that the main element 6a is placed on the seal section 26. Accordingly, the main element 6a can be readily detached by lifting the main element 6a. The main element 6a is constructed to be detached from the upper section 3b in the first case member 3A, with the auxiliary element 6b being fixed in the inner space 3d. Accordingly, the auxiliary element 6b remains fixed in the inner space 3d after detaching the main element 6a.

As described above, in the state that the auxiliary element 6b remains fixed in the inner space 3d, a replacement of the main element 6a is then placed on the seal section 26 of the upper section 3b. Or, after washing or cleaning the detached main element 6a, the washed or cleaned main element 6a is replaced on the seal section 26 of the upper section 3b. Following the reverse procedure to that described above, the pressing member 13 and the fixing member 37 are attached. Finally, the second case member 3B to which the ducts 23L, 23R are attached is assembled so as to cover the first case member 3A from above. With the above procedure, it is possible to recover the purification performance of the element 6 by replacing, washing or cleaning the main element 6a. Thus, the maintenance work of the air cleaner 10 is completed.

As described above, in the motorcycle 20 according to this embodiment, the seal section 26 for supporting the main element 6a is positioned above the pair of the left and the right frame members 15L, 15R. Consequently, although a part (i.e. lower section 3a) of the air cleaner case 3 is disposed between the left and the right frame members 15L, 15R, a relatively large area of inflow passage can be secured inside the seal section 26. Therefore, according to the motorcycle 20, a sufficient amount of intake air to the engine 11 can be secured.

In the motorcycle 20, the seal section 26 is positioned above the left and the right frame members 15L, 15R. Consequently, the width of the main element 6a can be made large. Accordingly, the surface area of the main element 6a can be increased. This also facilitates to secure a sufficient amount of intake air to the engine 11.

In the motorcycle 20, the element 6 of the air cleaner 10 is formed in a plate shape. Accordingly, in comparison with the construction in which the seal section 26 is disposed between the left and the right frame members 15L, 15R, a larger surface area of the element 6 can be secured. As a result, even if the element 6 is formed in a plate shape as in this embodiment, a sufficient surface area can be secured.

Also, in the motorcycle 20, since the element 6 is in a plate shape, the element 6 does not protrude upward, which makes the vertical length of the air cleaner case 3 relatively short.

Further, the motorcycle 20 includes the fuel tank 17, at least a part of which is positioned above the air cleaner case 3. In other words, at least a part of the fuel tank 17 and at least a part of the air cleaner case 3 overlap vertically. Nevertheless, according to the motorcycle 20 described above, a large surface area can be secured for the element 6 without largely protruding the element 6 upward. Consequently, the heights (vertical length) of the element 6 and the air cleaner case 3 can be reduced. Therefore, according to the motorcycle 20, even though the fuel tank 17 and the air cleaner case 3 overlap vertically, the fuel tank 17 can be prevented from largely protruding upward. In addition, according to the motorcycle 20, the height of an upper face of the fuel tank 17 can be reduced while a relatively large capacity of the fuel tank 17 is secured.

In the motorcycle 20, at least the portion 3c of the air cleaner case 3, which is the part positioned below the fuel tank 17, is dented, profiled or formed downward, or is concave. Accordingly, at least a part of the fuel tank 17 is positioned over the portion 3c of the air cleaner case 3, which is dented downward. Therefore, according to the motorcycle 20, although the fuel tank 17 and the air cleaner case 3 overlap vertically, the fuel tank 17 can be prevented from largely protruding upward. In addition, according to the motorcycle 20, the height of an upper face of the fuel tank 17 can be further reduced while a relatively large capacity of the fuel tank 17 is secured.

In the motorcycle 20, at least a part of the seat 18 is disposed above the fuel tank 17. Specifically, a front portion of the seat 18 including its front end is positioned above the fuel tank 17. As described above, in the motorcycle 20, the height (vertical length) of the air cleaner case 3 can be reduced. Therefore, according to the motorcycle 20, although the air cleaner case 3 and the fuel tank 17 overlap vertically and the fuel tank 17 and the seat 18 overlap vertically, the vehicle height (vertical length from the ground to the seat 18) can be reduced.

In the motorcycle 20, the fuel tank 17 includes the cap 19. Generally, when the cap 19 is disposed on an upper part of the fuel tank 17, the height of the fuel tank 17 is increased by the thickness of the cap 19. However, in the motorcycle 20, the cap 19 is positioned above the portion 3c of the air cleaner case 3, which is dented downward. Accordingly, even though the cap 19 is disposed on an upper part of the fuel tank 17, the height of the fuel tank 17 can be reduced while a relatively large capacity of the fuel tank 17 is secured.

When air having a high flow velocity directly hits the element 6, the air flows through the part (part directly hit by the air) in a concentrated manner. This results in large dispersion of flow velocity of the air that passes through the element 6. Consequently, the element 6 may not be utilized uniformly. A certain part may be soiled intensively or clogged. In contrast, in the motorcycle 20, the ducts 23L, 23R are connected to the second case member 3B in such a manner that when the inflow passages 3f are extended toward the inner space 3d side (dirty-side chamber 21 side), the inflow passages 3f do not intersect with an upper surface of the element 6. Thus, the air cleaner 10 of the motorcycle 20 is constructed such that the air supplied to the dirty-side chamber 21 does not directly hit the element 6. As a result, according to the motorcycle 20, the element 6 can be utilized uniformly and thereby prevented from being intensively soiled or being clogged.

The air cleaner 10 according to the invention is especially suitable for the off-road motorcycle 20 of this embodiment. On off-road motorcycles such as motocross type, the rider may operate a motorcycle with his/her hip lifted without being seated on the seat 18. Due to this, in the off-road motorcycle, the distance between the left and the right frame members 15L, 15R, which are located between the rider's legs, is narrowed as much as possible to allow the rider to easily lift his/her hip. Accordingly, in the off-road motorcycle 20, although a part (i.e. lower section 3a) of the air cleaner case 3 is disposed between the left and the right frame members 15L, 15R, the effect that a relatively large area of inflow passage can be secured inside the seal section 26 is remarkably achieved.

### Second Embodiment

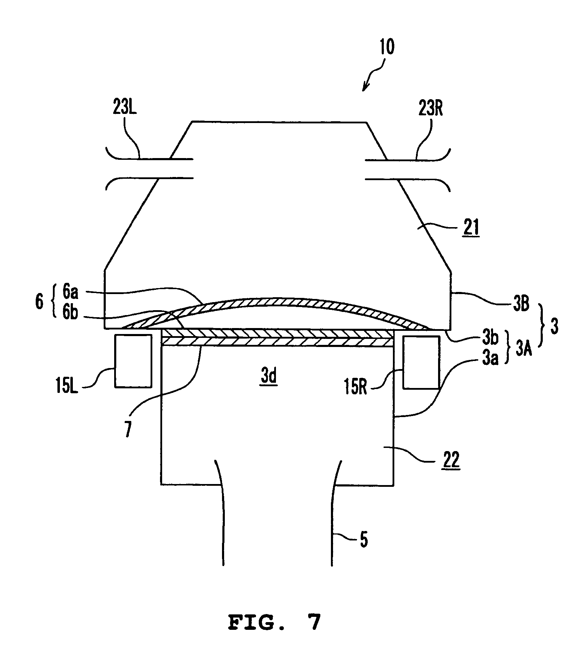

As shown in FIG. 7, a motorcycle 20 according to a second embodiment is constructed such that a main element 6a having a larger area than the main element 6a in the first embodiment is curved to be convex upward. Other constitution than the above is similar to the first embodiment and the description thereof will be omitted.

As described above, in the air cleaner 10 according to the second embodiment, the main element 6a having a large area is curved to be convex upward. Therefore, a large surface area of the main element 6a can be secured without widening the air cleaner case 3. Also, in the air cleaner 10 according to the second embodiment, the vertical length of the air cleaner case 3 can be reduced in comparison with a conventional air cleaner in which an element is formed in a bowl shape. Similarly, in the second embodiment, contradictory objects can be attained at the same time: a sufficient amount of intake air to the engine 11 is secured by securing a relatively large flow passage area while the vertical length of the air cleaner case 3 is reduced.

In the second embodiment, the main element 6a is curved to be convex upward. However, the main element 6a may be curved to be convex downward. In this configuration also, the same effect as above can be achieved. Further, the main element 6a may be curved to be convex upward in a bowl shape.

In the second embodiment, only the main element 6a is disposed in a curved manner. However, it is a matter of course that either one of or both of the auxiliary element 6b and the flameproof net 7 may be disposed in a curved manner.

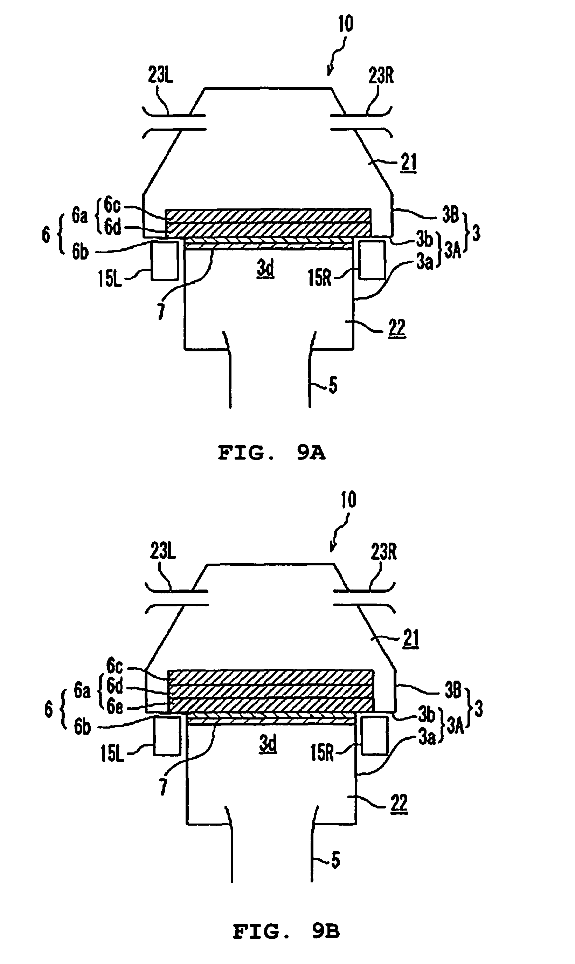

In each of embodiments described above, the first case member 3A is constructed by the lower section 3a and the upper section 3b, which are separate from each other. However, as shown in FIG. 9, the first case member 3A may be integrally formed. According to the thus configured motorcycle 20, the first case member 3A of the air cleaner 10 can be formed in one piece. Therefore, it is possible to reduce the number of parts.

In each of embodiments described above, the main element 6a is configured by a single element member (single-layered configuration). However, the main element 6a may be multi-layered. Specifically, as shown in FIG. 9(a), the main element 6a may be double-layered in which a first element 6c and a second element 6d having a finer element than the first element 6c has are provided. As shown in FIG. 9 (b), the main element 6a may be triple-layered in which a first element 6c, a second element 6d having a finer element than the first element 6c has, and a third element 6e having a finer element than the second element 6d has are provided. Further, the main element 6a may have more layers. Thus, the element is configured such that a plurality of elements are layered so that a downstream side element has a finer element. This improves air purification performance. In the multi-layered configuration described above, it is preferable that elements constituting the respective layers can be integrally replaced.

As described above, the present invention is useful for a motorcycle.

### Description of Reference Numerals and Symbols

- 1:: inlet
- 2:: outlet
- 3:: air cleaner case
- 3A:: first case member
- 3B:: second case member
- 3a:: lower section
- 3b:: upper section
- 3c:: portion
- 3d:: inner space
- 3e:: opening
- 3f:: inflow passage
- 3g:: extended portion
- 6:: element
- 10:: air cleaner
- 11:: engine
- 14:: head pipe
- 15:: main frame
- 15L, 15R:: frame member
- 15a:: inner end
- 16:: body frame
- 17:: fuel tank
- 18:: seat
- 19:: cap
- 20:: motorcycle
- 21:: dirty-side chamber
- 22:: clean-side chamber
- 23L, 23R:: duct
- 26:: seal section

## Claims

1. A motorcycle (20) comprising:
a body frame (16) having a head pipe (14) and left and right frame members (15L, 15R) extending rearward from the head pipe (15); and
an air cleaner (10) having an air cleaner case (3) and an element (6) disposed inside the air cleaner case (3) for cleaning air to be supplied to an engine (11), wherein the air cleaner case (6) includes:
a lower section (3a), at least a part of which lower section (3a) is disposed between the left and the right frame members (15L, 15R); and
an upper section (3b) having a seal section (26) disposed above the frame members (15L, 15R), at least a part of the seal section (26) being positioned outwardly of inner ends of the left and the right frame members (15L, 15R) in a lateral direction,
wherein the element (6) is supported and sealed by the seal section (26) and divides at least a part of the inside of the air cleaner case (3) into upper and lower spaces (21, 22).

2. The motorcycle (20) according to Claim 1, wherein the element (6) is formed in a plate shape.

3. The motorcycle (20) according to Claim 1 or 2, wherein the element (6) is curved to be convex upward.

4. The motorcycle (20) according to Claim 1, 2 or 3, further comprising a fuel tank (17), wherein at least a part of the fuel tank (17) is positioned above at least part of the air cleaner case (3).

5. The motorcycle (20) according to Claim 4, wherein at least a part of a portion of the air cleaner case (3) positioned below the fuel tank (17) is profiled downward.

6. The motorcycle (20) according to Claim 4 or 5, further comprising a seat (18), wherein at least a part of the seat (18) is positioned above at least part of the fuel tank (17).

7. The motorcycle (20) according to Claim 4, 5 or 6, wherein the fuel tank (17) includes a cap (19) positioned above at least a part of the air cleaner case (3).

8. The motorcycle (20) according to any preceding Claim, wherein the air cleaner case (3) includes a dirty-side chamber (21) positioned above the element (3) and an intake duct (23L, 23R) forming an inflow passage that introduces intake air into the dirty-side chamber (21).

9. The motorcycle (20) according to Claim 8, wherein the duct (23L, 23R) is connected to the dirty-side chamber (21) such that when the inflow passage is extended into the dirty-side chamber (21), an extended part (3g) of the inflow passage does not intersect with an upper surface of the element (6).

10. The motorcycle (20) according to Claim 8 or 9, wherein the inflow passage of the intake duct (23L, 23R) is arranged such that intake air is not focused directly towards an upper surface of the element (6).

11. The motorcycle (20) according to any preceding Claim, wherein the air cleaner case (3) includes a first case member (3A) having the upper section (3b) and the lower section (3a), and a second case member (3B) detachably attached to the first case member (3A) to cover the first case member from above, and the first case member (3A) is integrally formed.

12. The motorcycle (20) according to any preceding claim, wherein the upper section (3b) protrudes from the lower section (3a) above the left and right frame members (15L, 15R) and extends outward in the lateral direction.

13. The motorcycle (20) according to any preceding Claim, wherein the motorcycle (20) is an off-road type.

## Patentansprüche

1. Motorrad (20), das Folgendes umfasst:
einen Karosserierahmen (16) mit einem Lenkkopfrohr (14) sowie linken und rechten Rahmenelementen (15L, 15R), die von dem Lenkkopfrohr (15) nach hinten verlaufen; und
einen Luftfilter (10) mit einem Luftfiltergehäuse (3) und einem Element (6), das innerhalb des Luftfiltergehäuses (3) angeordnet ist, um einem Motor (11) zuzuführende Luft zu filtern, wobei das Luftfiltergehäuse (6) Folgendes beinhaltet:
eine untere Sektion (3a), von der wenigstens ein Teil zwischen dem linken und dem rechten Rahmenelement (15L, 15R) angeordnet ist; und
eine obere Sektion (3b) mit einer Abdichtsektion (26), die über den Rahmenelementen (15L, 15R) angeordnet ist, wobei wenigstens ein Teil der Abdichtsektion (26) außerhalb von inneren Enden des linken und des rechten Rahmenelements (15L, 15R) in einer lateralen Richtung positioniert ist;
wobei das Element (6) von der Abdichtsektion (26) getragen und abgedichtet wird und wenigstens einen Teil der Innenseite des Luftfiltergehäuses (3) in einen oberen und einen unteren Raum (21, 22) unterteilt.

2. Motorrad (20) nach Anspruch 1, wobei das Element (6) plattenförmig ausgebildet ist.

3. Motorrad (20) nach Anspruch 1 oder 2, wobei das Element (6) nach oben konvex gekrümmt ist.

4. Motorrad (20) nach Anspruch 1, 2 oder 3, das ferner einen Kraftstofftank (17) umfasst, wobei wenigstens ein Teil des Kraftstofftanks (17) über wenigstens einem Teil des Luftfiltergehäuses (3) positioniert ist.

5. Motorrad (20) nach Anspruch 4, wobei wenigstens ein Teil eines Abschnitts des unter dem Kraftstofftank (17) positionierten Luftfiltergehäuses (3) nach unten profiliert ist.

6. Motorrad (20) nach Anspruch 4 oder 5, das ferner einen Sitz (18) umfasst, wobei wenigstens ein Teil des Sitzes (18) über wenigstens einem Teil des Kraftstofftanks (17) positioniert ist.

7. Motorrad (20) nach Anspruch 4, 5 oder 6, wobei der Kraftstofftank (17) eine Verschlusskappe (19) aufweist, die über wenigstens einem Teil des Luftfiltergehäuses (3) positioniert ist.

8. Motorrad (20) nach einem der vorherigen Ansprüche, wobei das Luftfiltergehäuse (3) eine über dem Element (3) positionierte schmutzseitige Kammer (21) und ein einen Einströmkanal bildendes Ansaugrohr (23L, 23R) aufweist, das Ansaugluft in die schmutzseitige Kammer (21) einleitet.

9. Motorrad (20) nach Anspruch 8, wobei das Rohr (23L, 23R) mit der schmutzseitigen Kammer (21) verbunden ist, so dass, wenn der Einströmkanal in die schmutzseitige Kammer (21) verlängert wird, ein verlängerter Teil (3g) des Einströmkanals eine Oberseite des Elements (6) nicht schneidet.

10. Motorrad (20) nach Anspruch 8 oder 9, wobei der Einströmkanal des Ansaugrohrs (23L, 23R) so angeordnet ist, dass Ansaugluft nicht direkt auf eine Oberseite des Elements (6) fokussiert wird.

11. Motorrad (20) nach einem der vorherigen Ansprüche, wobei das Luftfiltergehäuse (3) ein erstes Gehäuseelement (3A) mit der oberen Sektion (3b) und der unteren Sektion (3a) und ein zweites Gehäuseelement (3B) aufweist, das abnehmbar am ersten Gehäuseelement (3A) angebracht ist, um das erste Gehäuseelement von oben abzudecken, und das erste Gehäuseelement (3A) einstückig ausgebildet ist.

12. Motorrad (20) nach einem der vorherigen Ansprüche, wobei die obere Sektion (3b) von der unteren Sektion (3a) über dem linken und rechten Rahmenelement (15L, 15R) vorsteht und in lateraler Richtung nach außen verläuft.

13. Motorrad (20) nach einem der vorherigen Ansprüche, wobei das Motorrad (20) vom Geländetyp ist

## Revendications

1. Motocyclette (20), comprenant :
un cadre de carrosserie (16), comportant un tube de direction (14) et des éléments de cadre de gauche et de droite (15L, 15R), s'étendant vers l'arrière à partir du tube de direction (15) ; et
un filtre à air (10), comportant un boîtier du filtre à air (3) et un élément (6) agencé à l'intérieur du boîtier du filtre à air (3) pour purifier l'air devant être amené vers un moteur (11), le boîtier du filtre à air (6) englobant :
une section inférieure (3a), au moins une partie de cette section inférieure (3a) étant agencée entre les éléments de cadre de droite et de gauche (15L, 15R) ; et
une section supérieure (3b), comportant une section d'étanchéité (26) agencée au-dessus des éléments de cadre (15L, 15R), au moins une partie de la section d'étanchéité (26) étant positionnée vers l'extérieur des extrémités internes des éléments de cadre de gauche et de droite (15L, 15R), dans une direction latérale ;
l'élément (6) étant supporté et son étanchéité étant établie par la section d'étanchéité (26), et divisant au moins une partie de l'intérieur du boîtier du filtre à air (3) en des espaces supérieur et inférieur (21, 22).

2. Motocyclette (20) selon la revendication 1, dans laquelle l'élément (6) a une forme en plaque.

3. Motocyclette (20) selon les revendications 1 ou 2, dans laquelle l'élément (6) est courbé pour être convexe vers le haut.

4. Motocyclette (20) selon les revendications 1, 2 ou 3, comprenant en outre un réservoir d'essence (17), au moins une partie du réservoir d'essence (17) étant positionnée au-dessus d'au moins une partie du boîtier du filtre à air (3).

5. Motocyclette (20) selon la revendication 4, dans laquelle au moins une partie d'une partie du boîtier du filtre à air (3) positionné au-dessous du réservoir de carburant (17) est profilée vers le bas.

6. Motocyclette (20) selon les revendications 4 ou 5, comprenant en outre un siège (18), au moins une partie du siège (18) étant positionnée au-dessus d'au moins une partie du réservoir d'essence (17).

7. Motocyclette (20) selon les revendications 4, 5 ou 6, dans laquelle le réservoir d'essence (17) englobe un bouchon (19) positionné au-dessus d'au moins une partie du boîtier du filtre à air (3).

8. Motocyclette (20) selon l'une quelconque des revendications précédentes, dans laquelle le boîtier du filtre à air (3) englobe une chambre du côté sale (21) positionnée au-dessus de l'élément (3), et un conduit d'admission (23L, 23R) formant un passage d'entrée introduisant l'air d'admission dans la chambre du côté sale (21).

9. Motocyclette (20) selon la revendication 8, dans laquelle le conduit (23L, 23R) est connecté à la chambre du côté sale (21), de sorte que lorsque le passage d'entrée est étendu dans la chambre du côté sale (21), une partie d'extension (3g) du passage d'entrée ne coupe pas une surface supérieure de l'élément (6).

10. Motocyclette (20) selon les revendications 8 ou 9, dans laquelle le passage d'entrée du conduit d'admission (23L, 23R) est agencé de sorte que l'air d'admission n'est pas focalisé directement vers une surface supérieure de l'élément (6).

11. Motocyclette (20) selon l'une quelconque des revendications précédentes, dans laquelle le boîtier du filtre à air (3) englobe un premier élément de boîtier (3A) comportant la section supérieure (3b) et la section inférieure (3a), et un deuxième élément de boîtier (3B), fixé de manière détachable sur le premier élément de boîtier (3A) pour recouvrir le premier élément de boîtier d'en haut, le premier élément de boîtier (3A) étant formé d'une seule pièce.

12. Motocyclette (20) selon l'une quelconque des revendications précédentes, dans laquelle la section supérieure (3b) déborde de la section inférieure (3a) au-dessus des éléments de cadre de gauche et de droite (15L, 15R), et s'étend vers l'extérieur dans la direction latérale.

13. Motocyclette (20) selon l'une quelconque des revendications précédentes, la motocyclette (20) étant du type tout-terrain.
